# EUROPEAN PATENT APPLICATION

(11) **EP 4 830 500 A1**
(43) Date of publication of application: **28.10.2026**
(21) Application number: 26167830.4
(22) Date of filing: 25.03.2026
(51) Int. Cl.: A01C 7/06, A01C 23/00

(54) **MOBILE AGRICULTURAL MATERIAL APPLICATION MACHINE**

(30) Priority: 22.04.2025 US 202563792688 P; 09.01.2026 US 202619445045
(71) Applicant: Deere & Company, Moline, IL 61265 (US)
(72) Inventor: MARX, Samuel E., 68163 Mannheim (DE); HERRMANN, Kenneth E., 68163 Mannheim (DE); YOUNG, Cole C., 68163 Mannheim (DE)
(74) Representative: Reichert, Christian

(57) **Abstract**

A mobile agricultural material application machine (100) is disclosed. The mobile agricultural material application machine (100) comprising: a material storage element (1307) configured to hold a material to be applied to a worksite; a pump (1315) configured to pump material from the material storage element (1307); a supply line (1311); and a material application assembly (1317) comprising: a controllable valve (1309) having a valve inlet (135) and a valve outlet (1352), the controllable valve (1309) configured to receive material pumped through the supply line (1311) from the material storage element (1307) and to controllably allow material to pass through the valve outlet; a pre-orifice element (1327) downstream of the valve and having an inlet (1354) and an outlet (1356); an exit orifice element (1325) downstream of the pre-orifice element (1327) and having an inlet (1358) and outlet (1319), the outlet of the exit orifice element (1325) defining an exit from the material application assembly (1317) through which material passes to be applied to the worksite and having at least a same flow rating as a flow rating of the outlet of the pre-orifice element (1327); and a material conduit (1329) extending between the pre-orifice element (1327) and the exit orifice element (1325).

## Description

### FIELD OF THE DESCRIPTION

The present description relates to agricultural material application machines. More specifically, the present description relates to reducing exit velocity of material applied by an agricultural material application machine.

### BACKGROUND

There is a wide variety of different types of agricultural machines that apply material to an agricultural field. These machines can be referred to as agricultural material application machines. Some such agricultural material application machines include sprayers, tillage machines with side dressing bars, air seeders, chemical application machines, and planters that have row units.

As one example, a row unit is often mounted to a planter with a plurality of other row units. The planter is often towed by a tractor over soil where seed is planted in the soil, using the row units. The row units on the planter follow the ground profile by using a combination of a down force assembly that imparts a down force to the row unit to push disk openers into the ground and gauge wheels to set depth of penetration of the disk openers.

Row units can also be used to apply material (e.g., pesticides, herbicides, or fertilizer) to the field (e.g., to the soil, to a seed, etc.) over which they are traveling. In some scenarios, each row unit has a valve that is coupled between a source of material to be applied, and an exit orifice. As the valve is actuated, the material passes through the valve, from the source to the exit orifice, and is applied to the field.

Many current systems apply the material in a substantially continuous way. For instance, where the application machine is applying a liquid fertilizer, it actuates the valve to apply a substantially continuous strip of the liquid fertilizer. The same is true of materials that provide other liquid substances, or granular substances, as examples.

The discussion above is merely provided for general background information and is not intended to be used as an aid in determining the scope of the claimed subject matter.

### SUMMARY

A mobile agricultural material application machine includes a material storage element that holds a material to be applied to a worksite, a pump that pumps material from the material storage element, a supply line, and a material application assembly. The material application assembly includes: a controllable valve having a valve inlet and a valve outlet, and configured to receive material pumped through the supply line from the material storage element and to controllably allow material to pass through the valve outlet; a pre-orifice element downstream of the valve and having an inlet and an outlet; an exit orifice element downstream of the pre-orifice element and having an inlet and an outlet defining an exit from the material application assembly and having at least a same flow rating as a flow rating of the outlet of the pre-orifice element; and a material conduit extending between the pre-orifice element and the exit orifice element.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a partial top view, partial block diagram of one example of a material application machine.
FIG. 2 is a side view showing one example of a row unit of the material application machine illustrated in FIG. 1.
FIG. 3 is a view of an application unit.
FIG. 4 is a side view showing another example of a row unit of the material application machine illustrated in FIG. 1.
FIG. 5 is a perspective view of a portion of a seed metering system.
FIG. 6 shows an example of a seed delivery system that can be used with a seed metering system.
FIG. 7 shows another example of a seed delivery system that can be used with a seed metering system.
FIG. 8 is a pictorial illustration showing an example material application assembly.
FIGS. 9A and 9B are top views of furrows and showing examples of discrete material application.
FIG. 10 is a block diagram showing one example of a material application system.

### DETAILED DESCRIPTION

For the purpose of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example can be combined with the features, components, and/or steps described with respect to other examples of the present disclosure.

As discussed above, many current systems apply material to a field in a relatively continuous way. This can result in wasted material. For instance, some material that is applied at certain locations between seeds or plants in a field may be unnecessary. This can result in lower productivity and lower efficiency. This problem can be exacerbated in instances where the material is applied at a relatively high rate, such as in the case of high rate fertilizer application. Some example systems, to address the above-described drawbacks of continuous application, utilize selective material placement. That is, some example systems controllably apply material to discrete target locations, such as to seed or plant locations, or to locations between seeds and plants, rather than as a continuous stream. Such example systems utilize a controllable valve and a final, outlet or exit orifice (e.g., an exit or outlet orifice of a hose or tube extending from the valve or a nozzle, downstream of the valve, with an exit or outlet orifice). Material is pressurized and pumped to the valve and the valve is controllably actuated to selectively allow material to flow to the final (or outlet/exit) orifice. Pressure can be adjusted to achieve desired flow rate. The select operating pressure (or pressure range) of the material application operation can affect the performance of the material application system. For example, in higher pressure (or higher pressure range) material application operations, the velocity of material exiting the final orifice can increase. The increased velocity alters the atomization profile of the material or can cause reflection of small droplets from the target surface, or both. This can result in less than a desired amount of material being applied to the desired area and can cause material to be applied to adjacent machine components. The application of material to adjacent machine components can cause material build up on the components, may clog or plug the components, and can cause other deleterious effects. Additionally, the increased velocity can cause the material, upon impact with, for example, a seed, cause the seed to move from the desired planting location or orientation, or both, which may result in reduced yield. In lower pressure (or lower pressure range) material application operations, the atomization profile of the material may be affected, such that a desired amount of material is not applied at the desired location (e.g., the fluid column can be inconsistent in volume at lower pressures (or lower pressure ranges).

Additionally, in some example systems, the valve is generally placed as close to the outlet/exit orifice as possible to more easily ensure that material can be discretely applied to desired locations given the speeds at which the agricultural machines travel. However, there is a desire for more spacing flexibility (e.g., flexibility in the distance between the valve and outlet/exit orifice) to accommodate a wider variety of machines and to provide room for other items to be placed on the machines, such as sensors.

The present description proceeds with respect to example systems that address the drawbacks discussed above and still allow for discrete and selective application of material by controllably actuating a valve and adjusting operation of a pump to adjust pressure of the material. The example systems herein include an application assembly including a control valve, a pre-orifice, a material conduit, and an exit (or outlet) orifice. The system includes a select flow rating (e.g., orifice size) arrangement between the pre-orifice and the exit orifice. It will be understood that flow rating (sometimes referred to as K-Factor or K-Value) describes a volume of material (e.g., fluid material) that will be delivered by (or flow through) an orifice at a given pressure (e.g., base pressure). Variance in flow rating can result from a variety of factors including, but not limited to, orifice size (e.g., diameter, cross-sectional area, etc.). Thus, orifices with different flow ratings may have different orifice sizes. However, flow rating differences between orifices can be the result of other properties of the orifices, other than orifice size (e.g., diameter, cross-sectional area, etc.). Thus, in some examples, orifices with a different flow rating may have a same orifice size (e.g., diameter or cross-sectional area).

In one example select arrangement,, the flow rating (e.g., orifice size (e.g. diameter, cross-sectional area, etc.)) of the exit orifice is at least the same as (or greater than) the flow rating (e.g., orifice size (e.g. diameter, cross-sectional area, etc.)) of the pre-orifice (i.e., flow rating (e.g., orifice size, etc.) of the exit orifice at least the same as or greater than (e.g., greater flow rating or larger size) the flow rating (e.g., orifice size, etc.) of the pre-orifice) . In this way, material is not metered by the exit orifice. Metering of the material at the exit orifice can increase pressure of the material in the material conduit between the pre-orifice and the exit orifice which, resultingly, increases the exit velocity. This select arrangement is particularly advantageous in higher pressure (or pressure range) material application operations, but is also suitable for lower pressure (or pressure range) material application operations. In one example, the pre-orifice has a flow rating of 0.466 and the exit orifice has a flow rating of 0.4.

In one example select arrangement, the flow rating (e.g., orifice size (e.g. diameter, cross-sectional area, etc.)) of the exit orifice is at least the same as (or lesser than) the flow rating (e.g., orifice size (e.g. diameter, cross-sectional area, etc.)) of the pre-orifice (i.e., flow rating (e.g., orifice size, etc.) of the exit orifice is at least the same as or lesser than (e.g., lesser flow rating or smaller size) the flow rating (e.g., orifice size, etc.) of the pre-orifice). In this way, material is metered by the exit orifice. Metering of the material at the exit orifice can increase the pressure of the material in the material conduit which can result in a more consistent fluid column delivered to the work surface in low pressure (or pressure range) material application operations. In one example, the pre-orifice has a flow rating of 0.335 and the exit orifice has a flow rating of 0.4.

Additionally, the material conduit comprises a rigid material (e.g., stainless steel, etc.) or semi-rigid material (e.g., semi-rigid tubing). The material conduit, when comprising semi-rigid material, has a Shore rating (e.g., Shore D rating, also referred to as hardness or Shore hardness) in the range of 39 to 49, or 44 plus or minus 5. Additionally, in some examples, the material conduit includes a small inner diameter (e.g., in the range of 2 millimeters (mm) to 5 mm). Additionally, in some examples, the material conduit includes a wall thickness in the range of 1.35 mm to 4.35 mm. The, hardness, wall thickness, and the inner diameter, alone or in combination, serve to reduce accumulation and variable capacitance and thereby improve performance of the material application system.

Additionally, the system disclosed herein can include a check valve (e.g., a mechanical check valve) that helps reduce or prevent material tailing. Material tailing is the continued, and undesired, escape of material from the application assembly that occurs after the control valve is closed. Generally, the tailing material is applied to undesired areas of the worksite. The check valve can be placed between the control valve and the exit orifice and can allow for one-way travel of the material (i.e., towards the exit orifice). The check valve is configured to open and close in response to changing pressure. In some examples, the check valve can include a biasing force (e.g., spring force, resistance of check valve material, etc.) that biases the check valve to a closed state (in which material is not permitted to travel through the check valve). The check valve may be configured such that the biasing force is overcome by sufficient pressure of the material, such as when the control valve is open. In this way, material is permitted to flow through the check valve when the control valve is open. Further, the check valve may be configured such that the biasing force is sufficient to resist opening of the check valve up to a certain pressure of the material. For instance, the pressure of the material when the control valve is closed may be insufficient to overcome the biasing force of the check valve. In this way, material is not permitted to flow through the check valve when the control valve is closed.

Other aspects of the system disclosed herein (e.g., orifice arrangement, material conduit, etc.) can help to improve (reduce or prevent) tailing, and the check valve can serve as an alternative or additional measure.

Further, as previously discussed, in some example systems, the control valve is generally placed as close to the exit orifice as possible to reduce the material volume between the valve and the exit orifice and to more easily ensure accurate application of material. However, there is a desire for spacing flexibility and for items, such as sensors, to be placed at locations to observe the worksite and operation. For instance, there is a desire for sensors, such as cameras, to be placed on the row units of a row crop planter to detect characteristics relative to the furrow and the placement of seeds. The control valve being closer to the exit orifice limits or prevents placement of such sensors on the row units. Accordingly, in the example systems disclosed herein, the control valve and the exit orifice can be separated by a sensor clearance distance such that a sensor, such as a camera, can be mounted and interposed between the valve and the exit orifice. The use of small inner diameter material conduit with a select rigidity (e.g., stiffness, Shore rating, etc.) can help to limit the material volume between the control valve and the exit orifice.

Further, the present description proceeds with respect to examples of the systems being deployed, at least partially, on a material application machine comprising or including row crop planter. It will be understood that in other examples the system can be deployed on other types of material application machines such as a sprayer, an air seeder, a tillage machine with a side-dress bar, or other material application machines.

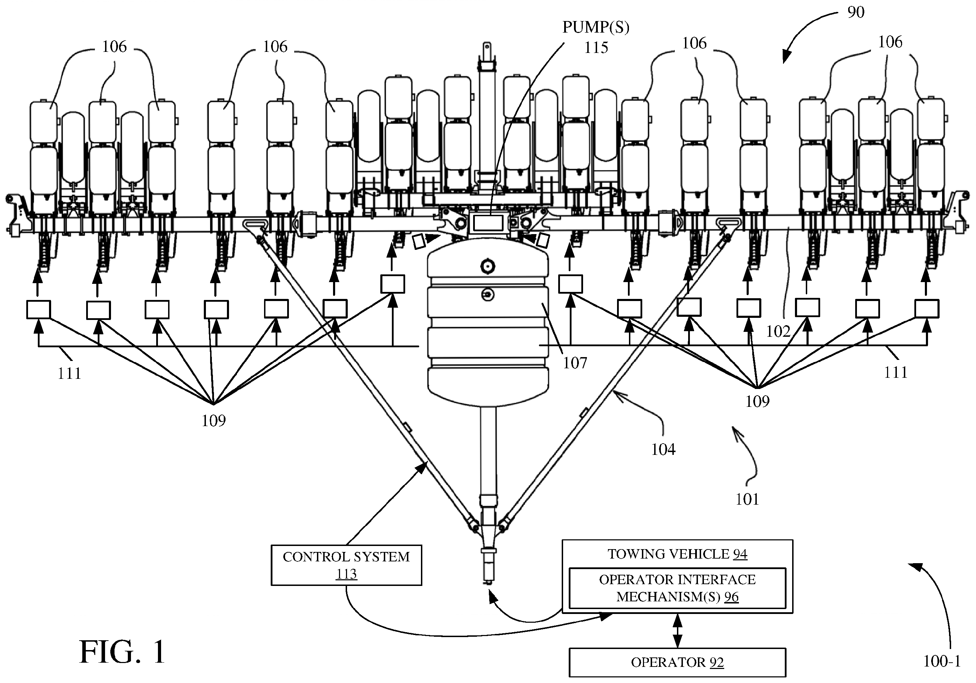

FIG. 1 is a partial pictorial, partial schematic top view of one example mobile agricultural material application machine 100 (illustratively 100-1 and also referred to herein as material application machine 100-1) that includes a towed agricultural material application implement 101 (also referred to herein as material application implement 101) and a towing vehicle 94 (illustratively a tractor). In the example shown in FIG. 1, material application machine 100-1 is a row crop planting machine. The towing vehicle 94 includes operator interface mechanisms 96. An operator can interact with operator interface mechanisms 96 to manipulate and control vehicle 94 and some or all portions of material application implement 101. In some examples, as will be discussed below, the material application machine 100-1 can also include a control system located on the material application implement 101 or the towing vehicle 94, or distributed across both, that can automatically control functionality of the material application machine 100-1.

It will be understood that in some examples, a material application machine need not include a towing vehicle and a towed implement, instead, in some examples, a material application machine can be self-propelled, that is, the apparatus that carries the material application functionality can also include propulsion means.

Material application implement 101, in the example shown in FIG. 1, is a row crop planting implement that illustratively includes a toolbar 102 that is part of a frame 104. FIG. 1 also shows that a plurality of planting row units 106 are mounted to the toolbar 102. FIG. 1 shows that material (e.g., fluid agricultural product, such as fertilizer, pesticide, herbicide, water, etc.) can be stored in one or more tanks 107 and pumped through a supply line 111 so the material can be dispensed in or near the rows being planted. In one example, a set of devices (e.g., actuators) 109 is provided to perform this operation.

In the illustrated example, actuators 109 are control valves and one or more pumps 115 pump the material from one or more tanks 107 to valves 109 through supply line 111. The control valves 109 can be controllably actuated, e.g., on a per-seed basis, as described below. The control signal for each control valve 109, in one example, can be a pulse width modulated control signal. The flow through the corresponding control valve 109 can be based on the duty cycle of the control signal (which controls the amount of time the control valve is open and closed). The flow through the control valve can be based on multiple duty cycles of multiple control valves or based on other criteria. The control signal can be a different type of control signal as well, instead of a pulse width modulated control signal. Further, the material can be applied in varying rates on a per-seed or per-plant basis. For example, fertilizer may be applied at one rate when it is being applied at a location spaced from a seed or plant location and at a second, higher, rate when it is being applied closer to the seed or plant location. These are examples only. Additionally, as previously discussed, the operating of the one or more pumps 115 can be controllably adjusted, such as by adjusting the operating speed of the one or more pumps 115, to adjust the operating pressure of the material. As will be understood, the operating pressure can be adjusted to achieve a desired flow rate of the material.

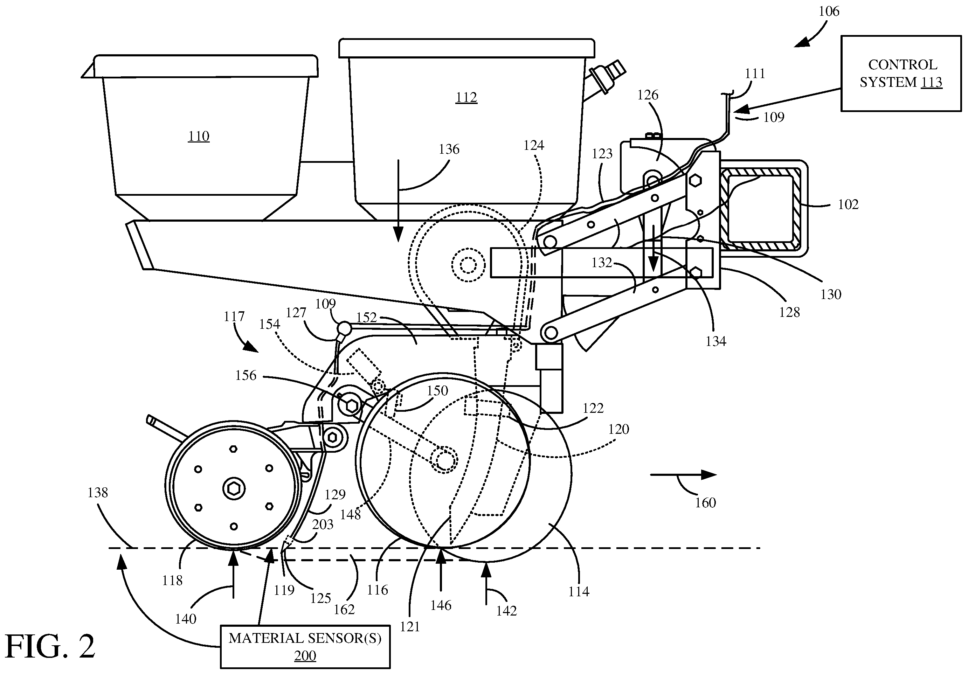

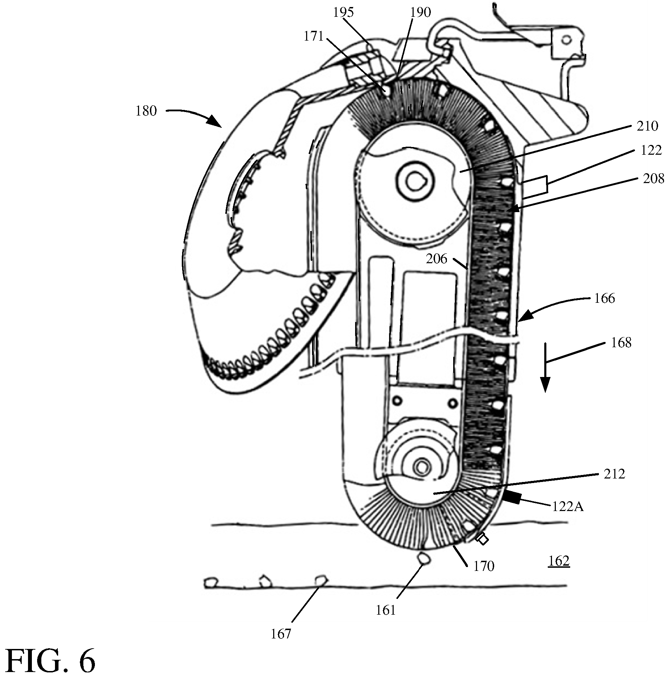

FIG. 2 is a side view of one example of a row unit 106, with control valve 109 and control system 113 shown as well. Row unit 106 illustratively includes a chemical tank 110 and a seed storage tank 112. It also illustratively includes one or more disc openers 114, a set of gauge wheels 116, and a set of closing wheels 118. Seeds from tank 112 are fed into a seed meter 124, e.g., by gravity or from a centralized commodity distribution system (e.g., exploiting pneumatic commodity distribution to each row unit). The seed meter 124 rotates and controls the rate at which seeds are dropped into a seed tube 120 or other seed delivery system, such as a brush belt or flighted belt (shown in FIGS. 6-7, respectively), from seed storage tank 112. The seeds can be sensed by a seed sensor 122.

In the example shown in FIG. 2, liquid material is passed, e.g., pumped or otherwise forced, through supply line 111 to an application assembly 117 on the row unit 106. Application assembly 117 includes a control valve 109, a pre-orifice element 127, a material conduit 129, and an exit orifice element 125. an inlet end of control valve 109. Control valve 109 is controlled by control system 113 to allow the liquid to pass from the inlet end of control valve 109 to an outlet end. A pre-orifice element 127 is coupled to (or otherwise in communication with) the outlet end of the control valve 109 and receives the liquid that passes through the control valve 109. The pre-orifice element 127 includes a housing that houses an internal orifice element (e.g., orifice disk) with a select flow rating (e.g., select orifice size (e.g., diameter, cross-sectional area, etc.), etc.). Pre-orifice element 127 acts to meter the liquid that is delivered downstream.

From the pre-orifice element 127, the liquid travels through a material conduit 129. The material conduit extends from the outlet of the pre-orifice element 127 to the inlet of the exit orifice element 125 (or in some examples to the inlet of a check valve 203). Material application assembly 117 defines a fluid pathway extending from an inlet end (e.g. inlet of control valve 109) to an outlet end 119 (e.g., outlet of exit orifice element 125) where the material is discharged onto a worksite (e.g., field), such as into a trench or furrow 162 or proximate a trench or furrow 162, opened by disc opener 114 (as is described in more detail below).

As shown in FIG. 2, outlet end (or exit orifice) 119 can be a part of an exit orifice element 125. Exit orifice element 125 can be a spray tip (or spray nozzle). In one example, exit orifice element 125 can be a 15-degree spray nozzle (or spray tip), that is, can be configured to emit material in a spray fan having an angle of 15 degrees (15 degree fan angle). In another example, exit orifice element 125 can be spray nozzle (or spray tip) with a spray fan angle in the range of 0 degrees (sometimes called straight stream) to 15 degrees. In one example, exit orifice element 125 can be a 25-degree spray nozzle (or spray tip), that is, can be configured to emit material in a spray fan having an angle of 25 degrees (25 degree fan angle). In another example, exit orifice element 125 can be a spray nozzle (or spray tip) with a spray fan angle in the range of 0 degree to 25 degrees. In other examples, the exit orifice element 125 can have a wide variety of different fan angles.

Material conduit 129 comprises a rigid material (e.g., stainless steel piping, etc.) or a semi-rigid material (e.g., rubber or polymer tubing). Material conduit 129 has a relatively small inner diameter. For example, the inner diameter of material conduit 129 can be smaller than an inner diameter of the supply line 111. In one example, the inner diameter of material conduit 129 is in the range of 3 mm to 5 mm. The rigidity and small inner diameter serve to limit the fluid volume between the pre-orifice element 127 and the exit orifice 119 and limit variable capacitance and accumulation. Thus, it will be understood that the material conduit 129 is relatively inelastic in that the material conduit 129 will, at the operating pressures of the system, resist internal deformation and thus, resist a change (e.g., an increase) in fluid volume.

It can also be seen that material conduit 129 is of a length (e.g., sensor clearance length) such that a sensor (e.g., a camera) can be mounted on the row unit between the control valve 109 and exit orifice element 125, such as on the shank 152 or on the support structure of the closing wheels 118.

Further, as shown, application assembly 117 can include a check valve 203 that is between the control valve 109 and the outlet orifice 119. In some examples, the check valve 203 can be upstream of the exit orifice element 125 or can be retained by exit orifice element 125. As discussed previously, the check valve 203 can allow for material travel in one direction (e.g., towards outlet orifice 119). Check valve 203 can be configured such that the pressure of the material, when the control valve 109 is open, allows the material to flow through the check valve 203 towards the outlet orifice 119 (e.g., the pressure of the material when the control valve 109 is open overcomes a biasing force of the check valve 203). Check valve 203 can be configured such that the pressure of the material, when the control valve 109 is closed, does not allow the material to flow through the check valve 203 towards the outlet orifice 119 (e.g., the pressure of the material when the control valve 109 is closed does not overcome a biasing force of the check valve 203). In one example, when pressure of the material drops below 7.5 pounds per square inch (PSI), such as when the control valve 109 is closed, the material is not able to flow through the check valve 203. Check valve 203 can help reduce or eliminate material tailing.

FIG. 2 also shows one or more material sensor(s) 200 that may be placed at any of a variety of different locations to detect material applied through application assembly 117. Material sensor(s) 200 can take a wide variety of different forms, some of which are discussed below. The material sensor(s) 200 detect the material so the relationship between where the material is applied and where it should be applied can be identified and actions can be taken based on the relationship.

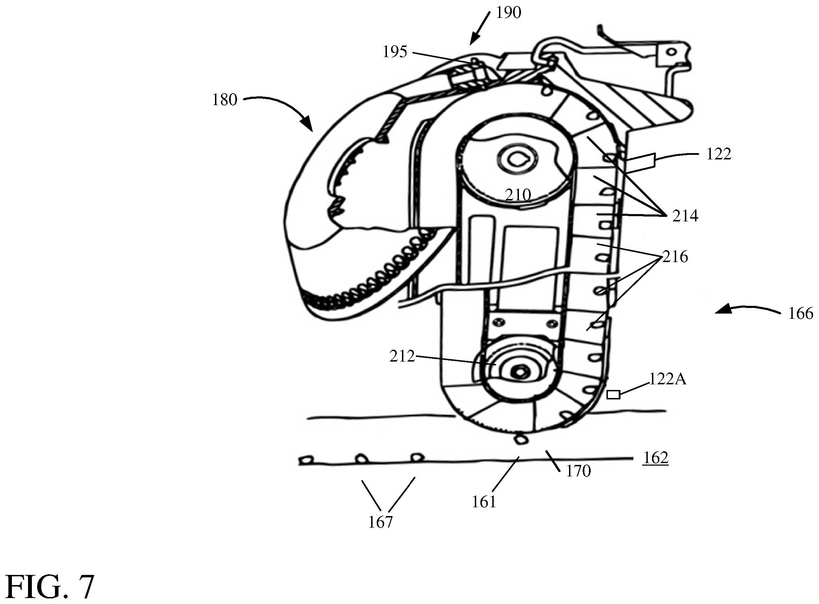

Some parts of row unit 106 will now be discussed in more detail. First, it will be noted that there are different types of seed meters 124, and the one that is shown is shown for the sake of example only and is described in greater detail below. However, in one example, each row unit 106 need not have its own seed meter. Instead, metering or other singulation or seed dividing techniques can be performed at a central location, for groups of row units 106. The metering systems can include finger pick-up discs and/or vacuum meters (e.g., having rotatable discs, rotatable concave or bowl-shaped devices), among others. The seed delivery system can be a gravity drop system (such as seed tube 120 shown in FIG. 2) in which seeds are dropped through the seed tube 120 and fall (via gravitational force) through the seed tube and out the outlet end 121 into the seed trench 162. Other types of seed delivery systems may be or may include assistive systems, in that they do not simply rely on gravity to move the seed from the metering system into the ground. Instead, such assistive systems actively assist the seeds in moving from the meter to a lower opening, where they exit or are deposited into the ground or trench. These can be systems that physically capture the seed and move it from the meter to the outlet end of the seed delivery system or they can be pneumatic systems that pump air through the seed tube to assist movement of the seed. The air velocity can be controlled to control the speed at which the seed moves through the delivery system. Some examples of assistive systems are described in greater detail below with respect to FIGS. 6 and 7.

A downforce actuator 126 is mounted on a coupling assembly 128 that couples row unit 106 to toolbar 102. Actuator 126 can be a hydraulic actuator, a pneumatic actuator, a spring-based mechanical actuator or a wide variety of other actuators. In the example shown in FIG. 2, a rod 130 is coupled to a parallel linkage 132 and is used to exert an additional downforce (in the direction indicated by arrow 134) on row unit 106. The total downforce (which includes the force indicated by arrow 134 exerted by actuator 126, plus the force due to gravity acting on row unit 106, and indicated by arrow 136) is offset by upwardly directed forces acting on closing wheels 118 (from ground 138 and indicated by arrow 140) and disc opener 114 (again from ground 138 and indicated by arrow 142). The remaining force (the sum of the force vectors indicated by arrows 134 and 136, minus the force indicated by arrows 140 and 142) and the force on any other ground engaging component on the row unit (not shown), is the differential force indicated by arrow 146. The differential force may also be referred to herein as the downforce margin. The force indicated by arrow 146 acts on the gauge wheels 116. This load can be sensed by a gauge wheel load sensor, which may be located anywhere on row unit 106 where it can sense that load. The gauge wheel load sensor can also be placed where it may not sense the load directly, but a characteristic indicative of that load. For example, the gauge wheel load sensor can be disposed near a set of gauge wheel control arms (or gauge wheel arm) 148 that movably mount gauge wheels 116 to shank 152 and control an offset between gauge wheels 116 and the discs in double disc opener 114, to control planting depth.

Arms (or gauge wheel arms) 148 illustratively abut against a mechanical stop (or arm contact member-or wedge) 150. The position of mechanical stop 150 relative to shank 152 can be set by a planting depth actuator assembly 154. Control arms 148 illustratively pivot around pivot point 156 so that, as planting depth actuator assembly 154 actuates to change the position of mechanical stop 150, the relative position of gauge wheels 116, relative to the double disc opener 114, changes, to change the depth at which seeds are planted.

In operation, row unit 106 travels generally in the direction indicated by arrow 160. The double disc opener 114 opens a furrow 162 in the soil 138, and the depth of the furrow 162 is set by planting depth actuator assembly 154, which, itself, controls the offset between the lowest parts of gauge wheels 116 and disc opener 114. Seeds are dropped through seed tube 120, into the furrow 162 and closing wheels 118 close the furrow 162 (e.g., push soil back into the furrow 162).

As the seeds are dropped through seed tube 120, the seeds can be sensed by seed sensor 122. Some examples of seed sensor 122 may include an optical or reflective sensor, which includes a radiation transmitter component and a receiver component. The transmitter component emits electromagnetic radiation and the receiver component then detects the radiation and generates a signal indicative of the presence or absence of a seed adjacent the sensors. In another example, row unit 106 may be provided with a seed firmer that is positioned to travel through the furrow 162, after seeds are placed in furrow 162, to firm the seeds in place. A seed sensor can be placed on the seed firmer and generate a sensor signal indicative of a seed. Some additional examples of seed sensors are described in greater detail below.

The present description proceeds with respect to the seed sensor being located to sense a seed passing it in seed tube 120, but this is for the sake of example only. Material application control system 113 illustratively receives a signal from seed sensor 122, indicating that a seed is passing sensor 122 in seed tube 120. Control system 113 then determines when to actuate control valve 109 so that material being applied through material application assembly 117 (and out outlet orifice 119 of material application assembly 117) will be applied at a desired location relative to the seed in trench or furrow 162. One example of how to determine when to actuate control valve 109 will now be described.

Control system 113 obtains various material application control data for controlling components (e.g., control valve 109, pumps 115, etc.) to desirably apply material. For example, control system 113 illustratively is programmed with, or detects a distance, e.g., a longitudinal distance, that the exit orifice 119 is from the exit end 121 of seed tube 120. Control system 113 also illustratively detects, or is provided with (e.g., by another component, such as a GPS unit, inertial measurement unit, etc.), the ground speed of row unit 106. As the row units 106 on an implement being towed by a prime mover (e.g., a tractor) may move faster or slower than the tractor during turns, particularly as the width of the implement increases, the control system 113 may sense or be provided the ground speed of each row unit 106 of the implement. By way of example, the control system 113 may sense or be provided information when the implement is turning right indicating that the rightmost row unit 106 is travelling slower, i.e., has a lower ground speed, than the leftmost row unit 106. Further, the control system 113 detects, is provided, or is programmed with, system data indicating the responsiveness of control valve 109 under certain conditions (such as under certain temperature conditions, certain humidity conditions, certain elevations, when spraying a certain type of fluid, etc.) and control system 113 also detects, is provided, or is programmed with one or more properties of the material being applied through control valve 109 (as this may affect the speed at which control valve 109 responds, the time it takes for the material to travel through application assembly 117 to the outlet orifice and be applied to furrow 162, etc.). Further, control system 113 illustratively detects (or is provided with a sensor signal indicative of) the forward speed of row unit 106 in the direction generally indicated by arrow 160. Additionally, the control system 113 is programmed with or is otherwise provided with the dimensions (e.g., length, internal diameter, volume, etc.) of material conduit 129.

With this type of information (material application control data discussed above), once control system 113 receives a seed sensor signal indicating that a seed is passing sensor 122 in seed tube 120, control system 113 determines the amount of time it will take for the seed to drop through the outlet end of seed tube 121 and into furrow 162 to reside at its final seed location and position in furrow 162. Control system 113 then determines when outlet orifice 119 will be in a desired location relative to that final seed location and system 113 generates a signal to control actuation of control valve 109 to apply the material at the desired location. By way of example, it may be that some material is to be applied directly on the seed. In that case, control system 113 times the actuation of control valve 109 so that the applied material will be applied at the seed location. In another example, it may be desirable to apply some material at the seed location and also a predetermined distance on either side of the seed location. In that case, control system 113 generates the signal to control control valve 109 so that the material is applied in the desired fashion. In other examples, it may be that the material is to be applied at a location between seeds in furrow 162. By way of example, relatively high nitrogen fertilizer may be most desirably applied between seeds, instead of directly on the seeds. In that case, control system 113 has illustratively been programmed with the desired location of the applied material, relative to seed location, so that it can determine when to actuate control valve 109 in order to apply the material between seeds. Further, as discussed above, control valve 109 can be actuated, by control system 113, to dispense material at a varying rate. Control valve 109 can be actuated to dispense more material on the seed location and less at locations spaced from the seed location, or vice versa, or according to other patterns. Additionally, as previously discussed, the one or more pumps 115 can be controlled, by control system 113, to vary the flow rate of material, such as by increasing the operating pressure by increasing the speed of the one or more pumps 115.

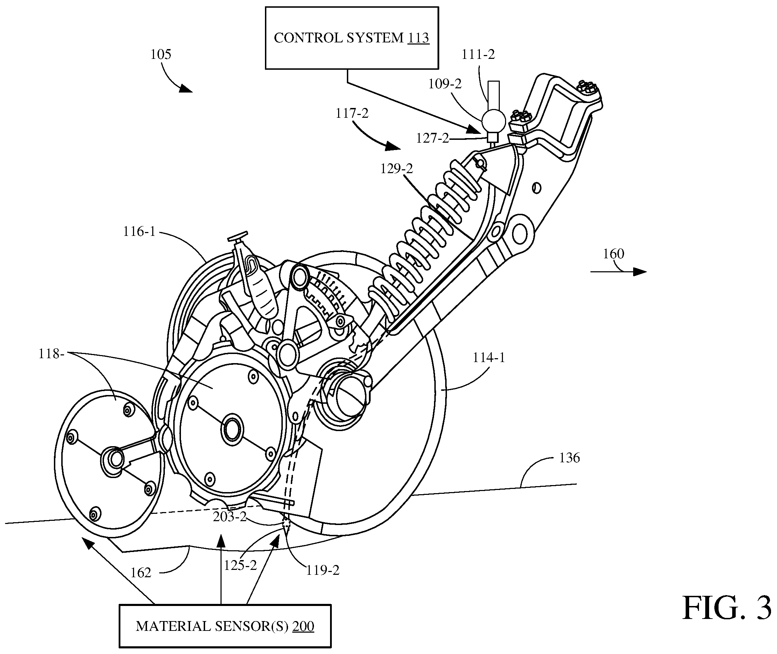

FIG. 3 is a side perspective view of an applicator unit 105. Some items are similar to those shown in FIG. 2 and they are similarly numbered. Briefly, in operation, applicator unit 105 attaches to a side-dress bar that is towed behind a towing vehicle 94, so unit 105 travels between rows (if the rows are already planted). However, instead of planting seeds, it simply applies material at a location between rows of seeds (or, if the seeds are not yet planted, between locations where the rows will be, after planting). When traveling in the direction indicated by arrow 160, disc opener 114-1 (in this example, it is a single disc opener) opens furrow 162 in the ground 136, at a depth set by gauge wheel 116-1. When control valve 109-2 is actuated, material is applied in the furrow 162 and closing wheels 118-1 then close the furrow 162.

As unit 105 moves, control system 113 controls control valve 109-2 to dispense material. Dispensing material can be done relative to seed or plant locations, if they are sensed or are already known or have been estimated. Dispensing material can also be done before the seed or plant locations are known. In this latter scenario, the locations where the material is applied can be stored so that seeds can be planted later, relative to the locations of the material that has been already dispensed.

Material sensor(s) 200 can sense the applied material so a determination can be made as to whether the material was applied to the correct spot. Action signals can be generated as well. Some examples of material sensor(s) 200 are described elsewhere.

FIG. 3 also shows that unit 105 can include an application assembly 117-2 (similar to or the same as application assembly 117 in FIG. 2). Application assembly 117-2 includes control valve 109-2 (similar to or the same as control valve 109), pre-orifice element 127-2 (similar to or the same as pre-orifice element 127), material conduit 129-2 (similar to or the same as material conduit 129), exit-orifice element 125-2 (similar to or the same as exit orifice element 125) which includes an exit orifice 119-2 (similar to or the same as exit orifice 119), and a check valve 203-2 (similar to or the same as check valve 203).

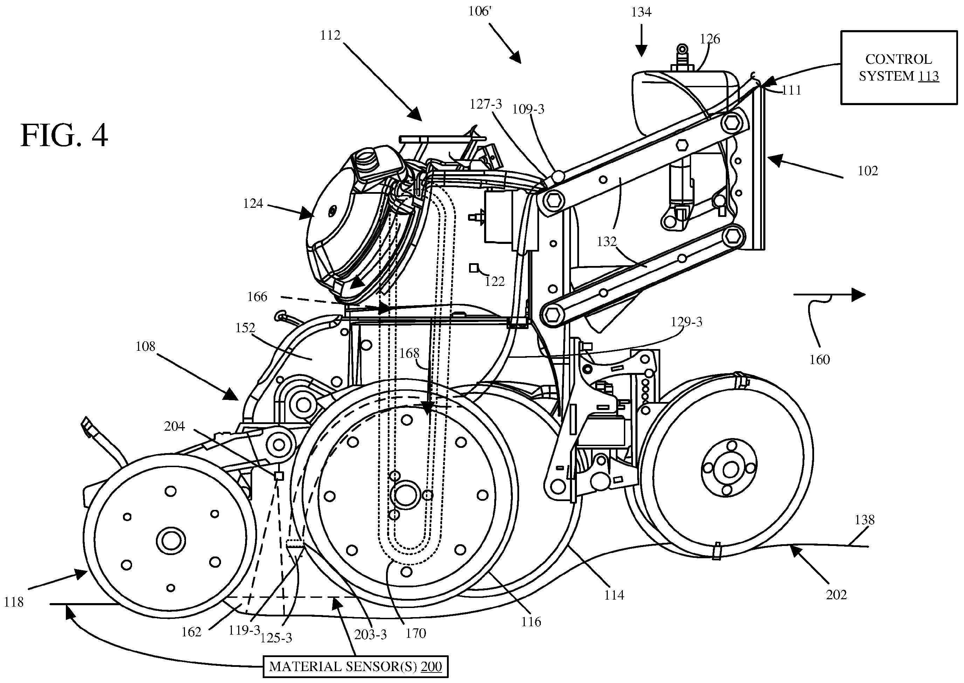

FIG. 4 shows another example of a row unit 106' which is similar, in some ways, to the row unit 106 shown in FIG. 2, and similar items are similarly numbered. However, instead of the seed delivery system being a seed tube 120, which relies on gravity to move the seed to the furrow 162, the seed delivery system shown in FIG. 4 is an assistive (or active) seed delivery system 166. Assistive seed delivery system 166 also illustratively has a seed sensor 122 disposed therein. There can also be more than one seed sensor 122, seed sensors of different types, seed sensors deployed at different locations, etc. Assistive seed delivery system 166 captures the seeds as they leave seed meter 124 and moves the seeds in the direction indicated by arrow 168 toward furrow 162. System 166 has an outlet end 170 where the seeds exit assistive seed delivery system 166, into furrow 162, where the seeds again reach their final resting location.

In such a system, control system 113 considers the speed at which delivery system 166 moves the seed from seed sensor 122 to the exit end 170. Control system 113 also illustratively considers the speed at which the seed moves from the exit end 170 into furrow 162. For instance, in one example the seed simply drops from exit end 170 into furrow 162 under the force of gravity. In another example, however, the seed can be ejected from assistive seed delivery system 166 at a greater or lesser speed than that which would be reached under the force of gravity. Similarly, it may be that the seed drops straight downward into furrow 162 from the outlet end 170. In another example, however, it may be that the seed is propelled slightly rearwardly from the outlet end 170, to accommodate for the forward motion of the row unit 106', so that the travel path of the seed is more vertical and so the seed rolls less once it reaches the furrow. Further, the seed can be ejected rearwardly and trapped against the ground by a trailing member (such as a pinch wheel) which functions to stop any rearward movement of the seed, after ejection, and to force the seed into firm engagement with the ground. Control system 113 also considers other material application control data previously discussed herein. FIG. 4 also shows that row unit 106' can include an application assembly 117-3 (similar to or the same as application assembly 117 in FIG. 2 or as application assembly 117-2 shown in FIG. 3). Application assembly 117-3 includes control valve 109-3 (similar to or the same as control valve 109 or control valve 109-2), pre-orifice element 127-3 (similar to or the same as pre-orifice element 127 or 127-2), material conduit 129-3 (similar to or the same as material conduit 129 or 129-2), exit-orifice element 125-3 (similar to or the same as exit orifice element 125 or 125-2) which includes an exit orifice 119-3 (similar to or the same as exit orifice 119 or 119-2), and check valve 203-3 (similar to or the same as check valve 203 or 203-2).

FIG. 4 also shows that row unit 106' can have a row cleaner 202. Row cleaner 202 can take many different forms and is shown as a set of cleaning wheels that remove residue from surface 138 ahead of opener 114. Further, FIG. 4 shows material sensor(s) 200. In one example, sensors 200 can include a sensor 204 (such as a camera, spectroscopy sensor, temperature sensor, electrical property sensor, beam break sensor, or other sensor) that senses the applied material as or after it exits the exit orifice 119-3 of the application assembly 117-3. In another example, sensor(s) 200 can be pressure sensor(s) or flow sensors mounted to sense the pressure or flow of the material being applied. The pressure sensors on flow sensors can sense a pressure or flow of material as it is being applied (e.g., exiting control valve 109-3 or exit orifice 119-3), a pressure drop across or flow through control valve 109-3, pressure pulses in material application assembly 117-3, or another pressure sensor or flow sensor. Other examples of sensors 200 are described in more detail elsewhere herein.

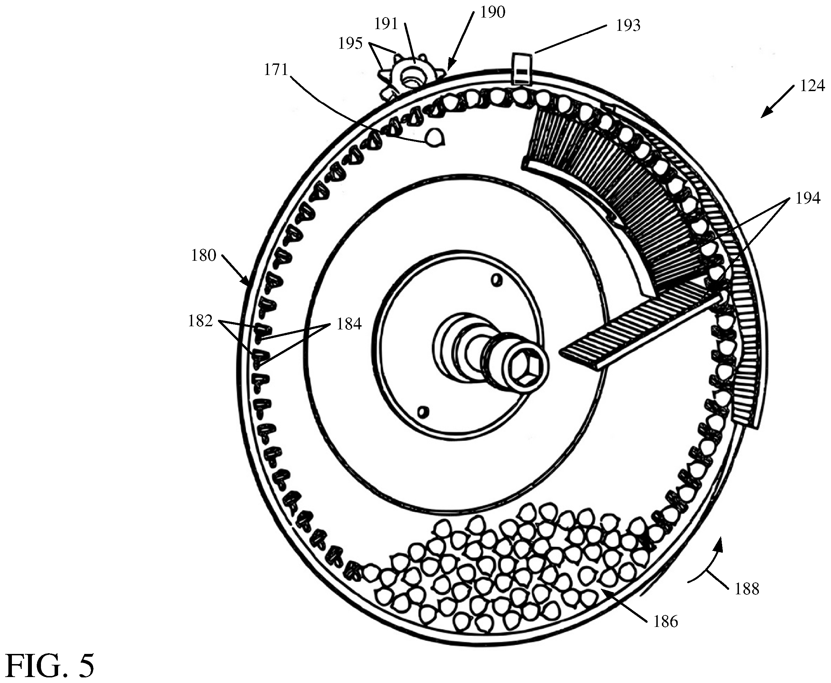

FIG. 5 shows one example of a rotatable mechanism that can be used as part of the seed metering system (or seed meter) 124. The rotatable mechanism includes a rotatable disc, or concave element, 180. Rotatable element 180 has a cover (not shown) and is rotatably mounted relative to the frame of the row unit 106 or 106'. Rotatable element 180 is driven by a motor (not shown) and has a plurality of projections or tabs 182 that are closely proximate corresponding apertures 184. A seed pool 186 is disposed generally in a lower portion of an enclosure formed by rotating mechanism 180 and its corresponding cover. Rotatable element 180 is rotatably driven by its motor (such as an electric motor, a pneumatic motor, a hydraulic motor, etc.) for rotation generally in the direction indicated by arrow 188, about a hub. A pressure differential is introduced into the interior of the metering mechanism so that the pressure differential influences seeds from seed pool 186 to be drawn to apertures 184. For instance, a vacuum can be applied to draw the seeds from seed pool 186 so that they come to rest in apertures 184, where the vacuum holds them in place. Alternatively, a positive pressure can be introduced into the interior of the metering mechanism to create a pressure differential across apertures 184 to perform the same function.

Once a seed comes to rest in (or proximate) an aperture 184, the vacuum or positive pressure differential acts to hold the seed within the aperture 184 such that the seed is carried upwardly generally in the direction indicated by arrow 188, from seed pool 186, to a seed discharge area 190. It may happen that multiple seeds are residing in an individual seed cell. In that case, a set of brushes or other members 194 that are located closely adjacent to the rotating seed cells tend to remove the multiple seeds so that only a single seed is carried by each individual cell. Additionally, a seed sensor 193 can also illustratively be mounted adjacent to rotating element 180. Seed sensor 193 generates a signal indicative of seed presence and this may be used by system 113, as will be discussed in greater detail below.

Once the seeds reach the seed discharge area 190, the vacuum or other pressure differential is illustratively removed, and a positive seed removal wheel or knock-out wheel 191, can act to remove the seed from the seed cell. Wheel 191 illustratively has a set of projections 195 that protrude at least partially into apertures 184 to actively dislodge the seed from those apertures. When the seed is dislodged (such as seed 171), it is illustratively moved by the seed delivery system (e.g., seed tube 120 (one example shown in FIG. 2) or active seed delivery system 166 (some examples of which are shown in FIGS. 4 and 6-7)) to the furrow 162 in the ground.

FIG. 6 shows an example of a seed metering system and a seed delivery system, in which the rotating element 180 is positioned so that its seed discharge area 190 is above, and closely proximate, assistive seed delivery system 166. In the example shown in FIG. 6, assistive seed delivery system 166 includes a continuous transport mechanism such as a belt 206 with a brush that is formed of distally extending bristles 208 attached to belt 206 that act as a receiver for the seeds. Belt 206 is mounted about pulleys 210 and 212. One of pulleys 210 and 212 is illustratively a drive pulley while the other is illustratively an idler pulley. The drive pulley is illustratively rotatably driven by a conveyance motor, which can be an electric motor, a pneumatic motor, a hydraulic motor, etc. Belt 206 is driven generally in the direction indicated by arrow 168.

Therefore, when seeds are moved by rotating element 180 to the seed discharge area 190, where they are discharged from the seed cells in rotating element 180, the seeds are illustratively positioned within the bristles 208 by the projections 182 that push the seed into the bristles 208.

Assistive seed delivery system 166 illustratively includes walls that form an enclosure around the bristles 208, so that, as the bristles 208 move in the direction indicated by arrow 168, the seeds are carried along with the bristles from the seed discharge area 190 of the metering mechanism, to an outlet end or a discharge area 170 either at ground level, or below ground level within the trench or furrow 162 that is generated by the furrow opener 114 on the row unit 106. FIG. 6 shows seeds 167 in furrow 162, seed 161 moving from outlet end 170 to furrow 162, and additional seeds in bristles 208.

Additionally, a seed sensor 122 is also illustratively coupled to seed delivery system 166. As the seeds are moved within bristles 208, sensor 122 can detect the presence or absence of a seed. It should also be noted that while the present description will proceed as having sensors 122, and 193, it is expressly contemplated that, in another example, only one sensor is used. Or additional sensors can also be used. Similarly, the seed sensor 122 shown in FIG. 6 can be disposed at a different location, such as that shown at 122A. Having the seed sensor closer to where the seed is ejected from the system can reduce error in identifying the final seed location. Again, there can be multiple seed sensors, or different kinds of seed sensors, and the seed sensor(s) can be located at many different locations.

FIG. 7 is similar to FIG. 6, except that assistive seed delivery system 166 does not include a belt with distally extending bristles. Instead, it includes a flighted belt (a continuous transport mechanism) in which a set of paddles 214 form individual chambers (or receivers 216), into which the seeds are dropped, from the seed discharge area 190 of the metering mechanism 180. The flighted belt moves the seeds from the seed discharge area 190 to the exit end 170 of the flighted belt, within the trench or furrow 162.

There are a wide variety of other types of seed delivery systems as well, that include a transport mechanism and a receiver that receives a seed. For instance, they include dual belt seed delivery systems in which opposing belts receive, hold, and move seeds to the furrow, a rotatable wheel that has sprockets, which catch seeds from the metering system and move them to the furrow, multiple transport wheels that operate to transport the seed to the furrow, and an auger, among others. The present description will proceed with respect to an endless member (such as a brush belt, a flighted belt) and/or a seed tube, but many other seed delivery systems are contemplated herein as well.

Before continuing with the description of applying material relative to seed location, a brief description of some examples of seed sensors 122, 122A and 193 will first be provided. Sensors 122, 122A and 193 are illustratively coupled to seed metering system 124 and seed delivery system 120, 166. Sensors 122, 122A and 193 sense an operating characteristic of seed metering system 124 and seed delivery systems 120, 166. In one example, sensors 122, 122A and 193 are seed sensors that are each mounted at a sensor location to sense a seed within seed tube 120, seed metering system 124, and assistive seed delivery system 166, respectively, as the seed passes the respective sensor location. In one example, sensors 122, 122A, and 193 are optical or reflective sensors and thus include a transmitter component and a receiver component. The transmitter component emits electromagnetic radiation into seed tube 120, seed metering system 124, and/or delivery system 166. In the case of a reflective sensor, the receiver component then detects the reflected radiation and generates a signal indicative of the presence or absence of a seed adjacent to sensor 122, 122A, and 193 based on the reflected radiation. With other sensors, radiation such as light, is transmitted through the seed tube 120, seed metering system 124, or the delivery system 166. When the light beam is interrupted by a seed, the sensor signal varies, to indicate a seed. Thus, each sensor 122, 122A, and 193 generates a seed sensor signal that pulses or otherwise varies, and the pulses or variations are indicative of the presence of a seed passing the sensor location proximate the sensor.

For example, in regard to sensor 122, bristles 208 pass sensor 122 and are colored to absorb a majority of the radiation emitted from the transmitter. As a result, absent a seed, reflected radiation received by the receiver is relatively low. Alternatively, when a seed passes the sensor location where sensor 122 is mounted, more of the emitted light is reflected off the seed and back to the receiver, indicating the presence of a seed. The differences in the reflected radiation allow for a determination to be made as to whether a seed is, in fact, present. Additionally, in other examples, sensors 122, 122A, and 193 can include a camera and image processing logic that allow visual detection as to whether a seed is present within seed metering system 124, seed tube 120, and/or assistive seed delivery system 166, at the sensor location proximate the sensor. They can include a wide variety of other sensors (such as RADAR or LIDAR sensors) as well.

For instance, where a seed sensor is placed on a seed firmer, it may be mechanical or other type of sensor that senses contact with the seed as the sensor passes over the seed. Also, while the speed of the seed in the delivery system (or as it is ejected) can be identified by using a sensor that detects the speed of the delivery system, in some examples, the speed and/or other characteristics of movement of the seed can be identified using seed sensors. For instance, one or more seed sensors can be located to sense the speed of movement of the seed, its trajectory or path, its instantaneous acceleration, its presence, etc. This can be helpful in scenarios in which the seed delivery system changes speed.

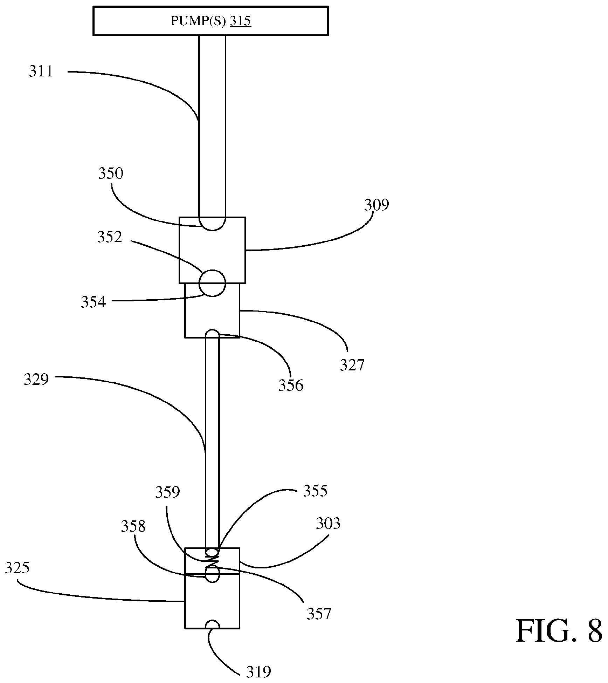

FIG. 8 is a pictorial illustration showing one example of an application assembly 317. Application assembly 317 is one example of application assembly 117, 117-2, or 117-3. As illustrated, application assembly 317 includes control valve 309, pre-orifice element 327, material conduit 329, exit orifice element 325, and can include check valve 303. Control valve 309 is one example of control valve 109, 109-2, or 109-3. Pre-orifice element 327 is one example of pre-orifice element 127, 127-2, or 127-3. Material conduit 329 is one example of material conduit 129, 129-2, or 129-3. Exit orifice element 325 is one example of exit orifice element 125, 125-2, or 125-3. Check valve 303 is one example of check valve 203, 203-2, or 203-3.

As illustrated, control valve 309 includes control valve inlet (or inlet orifice) 350 and control valve outlet (or outlet orifice) 352. Pre-orifice element 327 includes inlet (or inlet orifice) 354 and outlet (or outlet orifice) 356. Exit orifice element 325 includes inlet (or inlet orifice) 358 and outlet (or outlet/exit orifice) 319. Outlet 319 is one example of outlet 119, 119-2, or 119-3.

Check valve 303 includes check valve inlet (or inlet orifice) 355, check valve outlet (or outlet orifice) 357, and includes biasing mechanism 359 which illustratively includes a biasing member (e.g., spring, etc.) and a biased member (e.g., ball, etc.).

Material to be applied by application assembly 317 is pumped by one or more pumps 315 (which are one example of pumps 115) from a material source (e.g., one or more, such as 107, or other material storage elements) through a supply line 311 (which is one example of supply line 111) to control valve 309. Material enters control valve 309 through inlet 350 and exits control valve 309 through outlet 352. Control valve 309 is controllably actuated (e.g., opened and closed) to provide material through control valve 309 to pre-orifice element 327 which is coupled to or otherwise in communication with outlet 352 of control valve 309. The material flows from the outlet 352 of control valve 309 through an inlet 354 of pre-orifice element 327 and to, and through, outlet 356 or pre-orifice element 327. Outlet 356 acts to meter material being delivered to material conduit 329 and to exit orifice element 325. From outlet 356, material flow to and through material conduit 329 to and through an inlet 358 of exit orifice element 325. As can be seen, material conduit 329 has a relatively small internal diameter (e.g., small relative to the internal diameter of supply line 311). In one example, where application assembly 317 does not include a check valve (e.g. 303), material flows from material conduit 329 to and through inlet 358 and to and through exit orifice 319 to be applied to the agricultural worksite (e.g., a field). In an example in which application assembly 317 includes check valve 303, material flows from material conduit 329 to and through inlet 355 and to and through outlet 357 (when the check valve 303 is open, that is, when the biasing force of biasing member is overcome by the pressure of the material such that the check valve 303 is open). Material flows from check valve 303 to and inlet 358 and to and through exit orifice 319 to be applied to the agricultural worksite.

While not shown in FIG. 8, it will be understood that in other examples, check valve 303 can be separated from exit orifice element 325. For instance, in one example, material conduit 329 can include a first portion (e.g. a first hose) and a second portion (e.g., a second hose) and the check valve can be disposed between the first portion and the second portion such that the first portion is disposed between the check valve 303 and the pre-orifice element 327 and the second portion is disposed between the check valve 303 the exit orifice element 325. This is merely one example.

In one example, exit orifice 319 has at least the same flow rating (e.g. size (e.g., diameter, cross-sectional area, etc.), etc.) as outlet orifice 356 of pre-orifice element 327. In some examples, exit orifice 319 has a greater flow rating (e.g., is larger in size (e.g., diameter, cross-sectional area, etc.), etc.) than outlet orifice 356 of pre-orifice element 327. In this way, material is not metered by exit orifice element 325 and exit velocity is reduced, which can help with material delivery in higher pressure (or higher pressure ranges) operations. In some examples, exit orifice 319 has a lesser flow rating (e.g., is smaller in size (e.g., diameter, cross-sectional area, etc.), etc.) than outlet orifice 356 of pre-orifice element 327. In this way, material is metered by exit orifice element 325 which can help with material delivery in lower pressure (or lower pressure ranges) operations. In one example, the exit orifice 319 has a flow rating of 0.4 and the outlet orifice 356 has a flow rating of 0.466. In one example, the exit orifice 319 has a flow rating of 0.4 and the outlet orifice 356 has a flow rating of 0.335, Additionally, in some examples, inlet 358 is the same size as exit orifice 319.

As previously discussed, the pressure of the material can be adjusted (e.g., by adjusting the operating parameters (e.g., speed) of one or more pumps 315) to achieve a desired flow rate of the material. As the pressure increases, the resultant exit velocity of the material exiting exit orifice 319 increases. The increased exit velocity of the material can have deleterious effects, including overspray, movement of the seeds, contamination or plugging or clogging of other components of material application machine 100. For example, the increased exit velocity of material may cause some material to land on adjacent component of material application machine, such as, in the case of a planting machine, seed delivery system (e.g., 120 or 166) and may impair the operation of the seed delivery system, such as by plugging or clogging the seed delivery system. Additionally, or alternatively, in the case of a planting machine, the increased exit velocity of material may, upon the material impacting the seeds, cause the seeds to move from their desired planting location which may adversely affect resultant yield. A select orifice arrangement in which the exit orifice 319 and outlet orifice 356 have a same flow rating, or in which the exit orifice 319 has a greater flow rating, can serve to reduce exit velocity, which can particularly advantageous in high pressure (or high pressure range) operations. However, as mentioned previously, in low pressure (or low pressure range) operations it may be advantageous to increase the exit velocity of material to improve application of the material and thus, a select orifice arrangement in which the exit orifice 319 has a lower flow rating than the outlet orifice 356 can serve to increase the exit velocity and thus, be particularly advantageous in low pressure (or low pressure range) operations.

To limit material accumulation and variable capacitance, as discussed above, application assembly 317 includes small inner diameter material conduit 329 which also comprises a rigid material (e.g., stainless steel, etc.) or semi-rigid material (e.g., rubber or polymer tubing/hosing) and has a select wall thickness. In one example, the inner diameter is in the range of 2 mm to 5 mm. In one example, the material conduit has a Shore rating (Shore D rating) of 44 plus or minus 5. In one example, the material conduit has a wall thickness in the range of 1.35 mm to 4.35 mm.

Application assembly 317 improves material application and still allows for discrete or continuous application of material.

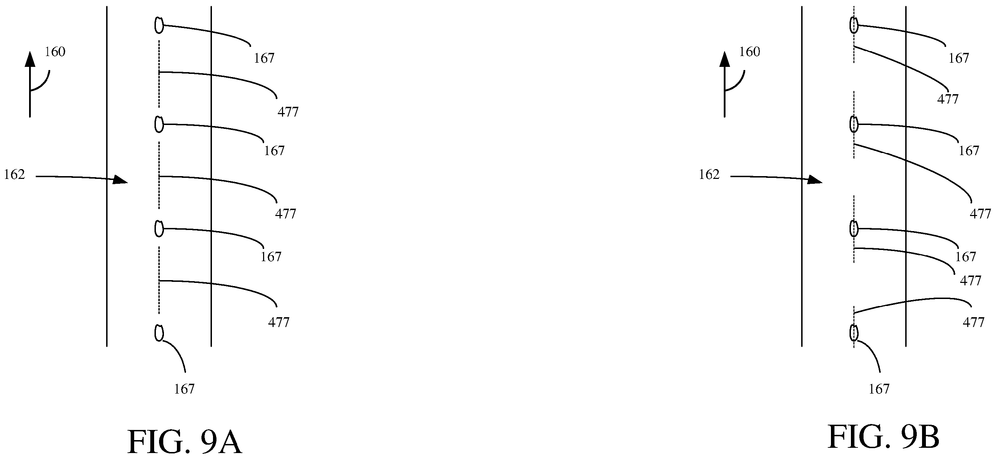

FIGS. 9A and 9B are top views of a furrow (or trench) showing examples of discrete material application performed by material application machine 100 in the form of an agricultural planting machine, such as material application machine 100-1. As illustrated in FIG. 9A, in some examples, material is discretely applied by material application machine 100 by delivering material 477 to discrete locations between seeds 177 in a furrow 162 opened by the material application machine 100 as the material application machine 100 travels in the travel direction 160. As illustrated in FIG. 9B, in some examples, material is discretely applied by material application machine 100 by delivering material 477 to discrete locations on and a certain distance before and after the seeds 477 in the furrow 162 opened by the material application machine 100 as the material application machine 100 travels in the travel direction 160. As can be seen, in the case of discrete material application, there is a break between material application locations, that is, the material is not applied in a continuous stream to the agricultural surface. While FIGS. 9A and 9B show examples of discrete application in the context of planting (or seeding), it will be understood that the systems herein can be used in other material application operations and with other material application machines. Additionally, while FIGS. 9A and 9B show examples of discrete application, it will be understood that the systems herein can be used to perform continuous material application.

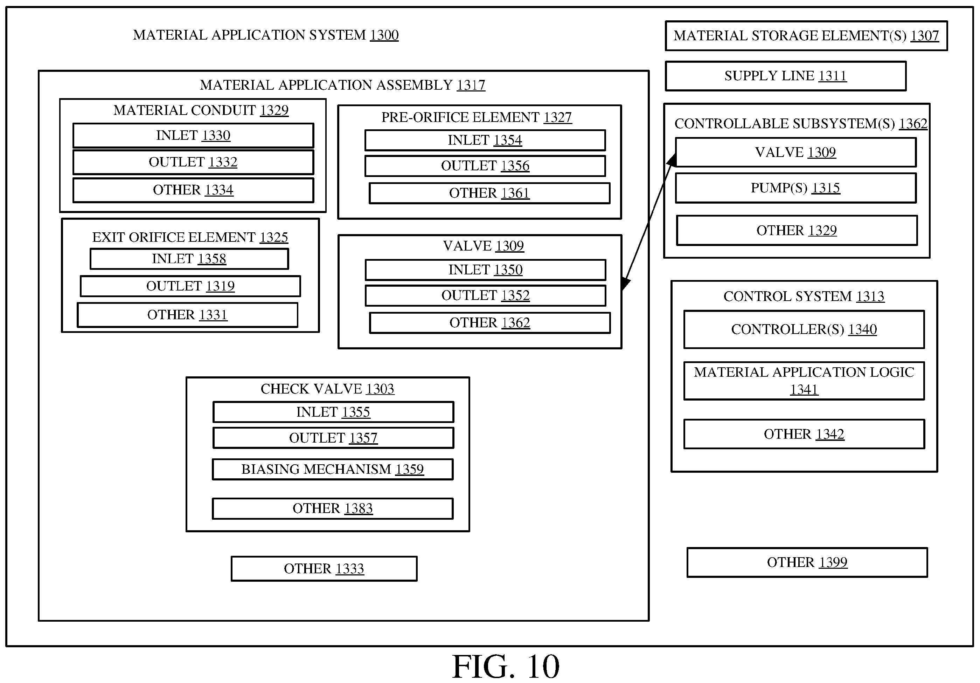

FIG. 10 is a block diagram of one example material application system 1300. As shown in FIG. 10, material application system 1300 can be a part of a material application machine, such as material application machine 100 (e.g., 100-1). Additionally, it will be understood that a material application machine, such as material application machine 100, can include a plurality of material application systems 1300, or a plurality of material application assemblies 1317, such as a material application system 1300, or a material application assembly 1317, for each row unit (e.g., 106, 106'). Material application system 1300 includes material application assembly 1317, material storage elements 1307, supply line 1311, control system 1313, controllable subsystems 1362, and can include various other items 1370.

Material application assembly 1317 includes material conduit 1329, pre-orifice element 1327, exit orifice element 1325, control valve 1309, check valve 1303, and can include other items 1333 as well. In some examples, material application assembly 1317 can be or can be similar to or the same as material application assembly 117, 117-2,117-3, or 317,, discussed herein. It will be understood that in some examples, material application assembly 1317 need not include check valve 1303.

Material conduit 1329 includes inlet 1330, outlet 1332, and can include other items 1334 as well. Material conduit 1329 can be similar to or the same as material conduit 129, 129-2, 129-3, or 329, discussed herein.

Pre-orifice element 1327 includes inlet (or inlet orifice) 1354, outlet (or outlet orifice) 1356, and can include other items 1361 as well. Pre-orifice element 1327 can be similar to or the same as pre-orifice element 127, 127-2, 127-3, or 327, discussed herein. Inlet 1354 can be similar to or the same as inlet 354 and outlet 1356 can be similar to or the same as outlet 356, discussed herein.

Exit orifice element 1325 includes inlet (or inlet orifice) 1358, outlet (or outlet/exit orifice 1319), and can include other items 1319 as well. Exit orifice element 1325 can be similar to or the same as exit orifice element 125, 125-2, 125-3, or 325, discussed herein. Inlet 1358 can be similar to or the same as inlet 358, discussed herein. Outlet 1319 can be similar to or the same as outlet (or outlet/exit orifice) 319, 119, 119-2, or 119-3, discussed herein.

Control valve 1309 (which is also a controllable subsystem 1362) includes inlet 1350, outlet 1352, and can include other items 1362 as well. Control valve 1309 can be similar to or the same as control valve 109, 109-2, 109-3, or 309, discussed herein. Inlet 1350 can be similar to or the same as inlet 350 and outlet 1352 can be similar to or the same as outlet 352, discussed herein.

Check valve 1303 includes inlet 1355, outlet 1357, biasing mechanism 1359, and can include other items 1383 as well. Check valve 1303 can be similar to or the same as check valve 203, 203-2, 203-3, or 303, discussed herein. Inlet 1355 can be similar to or the same as inlet 355, discussed herein. Outlet 357 can be similar to or the same as outlet 357, discussed herein. Biasing mechanism 1359 can be similar to or the same as biasing mechanism 359, discussed herein. In some examples, as previously discussed, the biasing mechanism may include a spring, resistance of check valve material, or other biasing mechanisms.

Material storage elements 1307 act as a source of material to be applied by material application assembly 1317. Material storage elements 1307 can be similar to or the same as material tanks 107, or can be various other material storage elements. Supply line 1311 provides a material conduit between material storage elements 1307 and material application assembly 1317. Supply line 1311 can be similar to or the same supply line 111 or 311, discussed herein.

Controllable subsystems 1362 are controllable by control system 1313 to control the application of material to the worksite. Controllable subsystems 1362 include control valve 1309, one or more pumps 1315, and can include various other items 1329. Pumps 1315 can be similar to pumps 115 or 315, discussed herein.

Control system 1313 can include one or more controllers 1340 and can include other items 342. One more controllers 1340 can generate control signals to control control valve 1309 or pumps 1315, or both, to control flow rate and application of material. As previously discussed, one or more controllers 1340 can generate control signals to adjust the operating pressure of the material (and thus the flow rate of material) by controlling pumps 1315, such as by controlling the operating parameters (e.g., speed) of pumps 1315. Additionally, as previously discussed, controllers 1340 can generate control signals to control actuators (or control valves) 1309 to actuate to allow a desired amount of material to flow through material application assembly 1317. For example, a control signal to control a control valve 1309 can be a pulse width modulated control signal. The flow through the corresponding control valve 1309 can be based on the duty cycle of the control signal (which controls the amount of time the control valve is open and closed). The flow through the control valve 1309 can be based on multiple duty cycles of multiple control valves or based on other criteria. The control signal can be a different type of control signal as well, instead of a pulse width modulated control signal.

Further, control system 1313 includes material application logic 1341 which calculates an offset (a timing offset) which indicates a timing for actuating the control valve 1309 to apply material to desired locations. The offset identified (calculated) by material application logic 1341 can be used by controllers 1340 to control control valve 1309 (as well as other controllable subsystems 1362). Material application logic 1341 identifies the offset based on material application control data discussed herein, which can include a speed of the material application machine (or a speed of individual components of the material application machine 100, such as a row unit, implement, or towing vehicle), seed sensor data provided by seed sensors (e.g., 122, etc.), speed of the seed delivery components (e.g., speed of seed meter 180, speed of assistive seed delivery system 166), length of seed delivery components (e.g., length of seed tube 120), distance between the outlet of the seed delivery components and the worksite, the length and volume of material conduit 1329, as well as other material application control data discussed herein.

It should also be noted that the different examples described herein can be combined in different ways. That is, parts of one or more examples can be combined with parts of one or more other examples. All of this is contemplated herein.

## Claims

1. A mobile agricultural material application machine (100) comprising:
a material storage element (1307) configured to hold a material to be applied to a worksite;
a pump (1315) configured to pump material from the material storage element (1307);
a supply line (1311); and
a material application assembly (1317) comprising:
a controllable valve (1309) having a valve inlet (135) and a valve outlet (1352), the controllable valve (1309) configured to receive material pumped through the supply line (1311) from the material storage element (1307) and to controllably allow material to pass through the valve outlet;
a pre-orifice element (1327) downstream of the valve and having an inlet (1354) and an outlet (1356);
an exit orifice element (1325) downstream of the pre-orifice element (1327) and having an inlet (1358) and outlet (1319), the outlet of the exit orifice element (1325) defining an exit from the material application assembly (1317) through which material passes to be applied to the worksite and having at least a same flow rating as a flow rating of the outlet of the pre-orifice element (1327); and
a material conduit (1329) extending between the pre-orifice element (1327) and the exit orifice element (1325).

2. The mobile agricultural material application machine (100) of claim 1, wherein the flow rating of the outlet of the exit orifice element (1325) is greater than the flow rating of the outlet of the pre-orifice element (1327).

3. The mobile agricultural material application machine (100) of claim 1, wherein the flow rating of the outlet of the exit orifice element (1325) is less than the flow rating of the outlet of the pre-orifice element (1327).

4. The mobile agricultural material application machine (100) of one of the claims 1 to 3, and further comprising a check valve upstream of the outlet of the exit orifice element (1325), the check valve configured to open and close in response to changing pressure of the material and, when open, allow material to pass toward the outlet of the exit orifice element (1325).

5. The mobile agricultural application machine of one of the claims 1 to 4, wherein the material conduit (1329) has an inner diameter in the range of 2 millimeters (mm) to 5 mm, a wall thickness in the range of 1.35 mm to 4.35 mm, and comprises a material having a Shore rating in the range 39 to 49.

6. The mobile agricultural material application machine (100) of one of the claims 1 to 5, wherein the mobile agricultural material application machine (100) includes a seed delivery system configured to deliver seeds to the worksite.

7. The mobile agricultural material application machine (100) of one of the claims 1 to 6, and further comprising a control system configured to identify one or more dimensions of the material conduit (1329) and to control the controllable valve (1309) based, at least, on the one or more dimensions of the material conduit (1329).

8. The mobile agricultural material application machine (100) of claim 7, wherein the one or more dimensions include one or more of: (i) a length of the material conduit (1329); or (ii) a volume of the material conduit (1329).

9. The mobile agricultural material application machine (100) of claim 7 or 8, wherein the control system identifies a timing offset based, at least, on the one or more dimensions of the material conduit (1329) and controls the controllable valve (1309) based on the timing offset.

10. The mobile agricultural material application machine (100) of one of the claims 1 to 9, wherein the material conduit (1329) comprises a rigid or semi-rigid material and is of a length such that the pre-orifice element (1327) and the exit orifice element (1325) are separated by a sensor clearance distance such that a camera can be mounted between the pre-orifice element (1327) and the exit orifice element (1325).

11. The mobile agricultural material application machine (100) of one of the claims 1 to 10, and further comprising a control system configured to identify one or more dimensions of the material conduit (1329) and to control the controllable valve (1309) based, at least, on the one or more dimensions of the material conduit (1329), wherein the one or more dimensions include one or more of: (i) a length of the material conduit (1329); or (ii) a volume of the material conduit (1329), and wherein the control system identifies a timing offset based, at least, on the one or more dimensions of the material conduit (1329) and controls the controllable valve (1309) based on the timing offset.
